# FASCICULE DE BREVET EUROPEEN

(11) **EP 4 107 011 B1**
(45) Date de publication et mention de la délivrance du brevet: **03.04.2024**
(21) Numéro de dépôt: 21707336.0
(22) Date de dépôt: 02.02.2021
(51) Int. Cl.: B60C 9/00, B60C 9/08, B60C 13/00, B60C 9/04, B60C 9/20

(54) **PNEUMATIQUE A FAIBLE HAUTEUR DE FLANC**
REIFEN MIT NIEDRIGER SEITENWANDHÖHE
TIRE HAVING A LOW SIDEWALL HEIGHT

(30) Priorité: 19.02.2020 FR 2001658
(43) Date de publication de la demande: 28.12.2022
(73) Titulaire: COMPAGNIE GENERALE DES ETABLISSEMENTS MICHELIN, 63000 Clermont-Ferrand (FR)
(72) Inventeur: SALLAZ, Gilles, 63040 CLERMONT-FERRAND Cedex 9 (FR); FOUCHER, Benoit, 63040 CLERMONT-FERRAND Cedex 9 (FR); DELFOSSE, Florent, 63040 CLERMONT-FERRAND Cedex 9 (FR)
(74) Mandataire: M.F.P. Michelin
(86) Numéro de dépôt international: PCT/FR2021/050185
(87) Numéro de publication internationale: WO 2021/165596

(56) Documents cités:
- WO-A1-01/49926
- WO-A1-2019/180352
- FR-A1- 2 969 039

## Description

La présente invention concerne un pneumatique, plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques à armature de carcasse radiale pour le transport de charge lourde, ladite armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection. L'armature de sommet peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la couche de sommet dite de travail, radialement la plus intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5°.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis l'axe de rotation du pneumatique est inférieure à, respectivement supérieure à ».

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Ce problème existe dans le cas de bords de deux couches d'éléments de renforcement, lesdites couches n'étant pas obligatoirement radialement adjacentes.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Cette amélioration de l'endurance des pneumatiques permet d'envisager au moins la possibilité d'un rechapage lorsque la bande de roulement est usée. En effet, lorsqu'il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Par ailleurs, l'usage de pneumatiques sur des véhicules de type poids-lourds à usage routier, notamment lorsqu'ils sont en monte jumelée sur un essieu moteur ou sur des remorques conduit parfois à des utilisations non voulues en mode dégonflé. En effet, les analyses réalisées montrent qu'il est fréquent que des pneumatiques soient utilisés en mode sous-gonflé sans que le chauffeur s'en aperçoive ou ne s'arrête pour réparer, par exemple en cas de crevaison. Des pneumatiques sous-gonflés, voire totalement dégonflés, sont ainsi régulièrement utilisés sur des distances parcourues très significatives. Le pneumatique ainsi utilisé subit des déformations beaucoup plus importantes que dans les conditions normales d'utilisation. En effet, dans le cas d'une totale perte de pression de l'un des deux pneumatiques jumelés, la quasi-intégralité de la charge se reporte sur le second, le niveau de flèche ou d'écrasement des deux pneumatiques se retrouvant ainsi considérablement augmenté et avec lui l'importance des courbures et variations de courbure au tour de roue des câbles de l'armature de carcasse. Le défaut de rigidité pneumatique du pneu dégonflé conduisant de surcroît à une concentration de sa flexion dans la zone du flanc la moins rigide, les câbles de son armature de carcasse sont ainsi susceptibles d'atteindre localement de très forts niveaux de flexion pouvant altérer irréversiblement leurs propriétés, de résistance notamment, ne leur permettant plus de supporter ultérieurement les contraintes liées à une pression de gonflage rétablie à sa valeur nominale.

L'utilisation de câbles frettés (par exemple 3+9×0.18+0.15 6.5/12.5/3.5 SSZ au lieu de 3+9×0.18 6.5/12.5 SS) permet d'améliorer significativement la résistance à ce type de phénomène mais les pneumatiques ainsi réalisés, s'ils présentent moins de risques d'endommagement liés à des roulages à faible pression de gonflage, présentent toutefois de moins bonnes performances en termes d'endurance en flexion du fait notamment du frottement entre le fil de frette et les fils de la couche externe du câble lors des déformations du pneumatique en roulage dans des conditions normales d'utilisation.

Une nouvelle dimension de pneumatique, 315/45R22.5, a été proposée depuis quelques années. Cette dimension de pneumatique permet de baisser la hauteur de sellette des tracteurs de véhicule poids-lourd pour permettre leur association avec des remorques proposant trois mètres de hauteur intérieure utile, tout en respectant la réglementation européenne qui n'autorise pas des hauteurs maximales hors-tout de plus de 4 mètres.

De tels pneumatiques sont conçus pour porter une charge maximale de 2900 Kg en monte jumelée (indice de charge de 145) pour autoriser des chargements pouvant aller jusqu'au maximum de la réglementation européenne qui correspond à une charge maximale de 11 500 Kg par essieu.

Les remorques évoquées précédemment étant destinées à une augmentation du volume de chargement plus que de celui de la charge transportée, les pneumatiques vont le plus souvent porter des charges bien inférieures à leur capacité maximale.

Il est toutefois nécessaire dans la conception du pneumatique de garantir cette capacité de charge maximale et de lui associer des performances d'endurance les meilleures possibles.

La dimension spécifique du pneumatique présentée ci-dessus, qui s'associe à une hauteur de flanc inférieure à 165 mm, conduit pour une charge portée donnée à une déformation supérieure à celle d'un autre pneumatique dont la hauteur de flanc serait plus importante. La dimension même du pneumatique conduit donc d'une part à de faibles rayons de courbures des éléments de renforcement de l'armature de carcasse dans la zone du flanc et d'autre part, à de plus fortes variations de courbures au tour de roue. Ces deux éléments liés à l'utilisation du pneumatique sont pénalisants pour ce qui est de la performance en termes d'endurance.

Si on associe ce pneumatique de dimension 315/45R22.5 à sa capacité de charge maximale au cas décrit précédemment d'une crevaison ou perte de pression en monte jumelée, sa très faible hauteur de flanc peut conduire à une détérioration extrêmement rapide des câbles de l'armature de carcasse.

Le brevet EP-B-3 061 627 propose l'utilisation de câbles compacts du type 19.18 (0.20+18×0.18 10 S). Ces câbles constitués de fils de faibles diamètres sont connus pour leur utilisation en armature de carcasse pour poids lourds notamment du fait des faibles diamètres des fils qui permettent de mieux supporter les courbures répétées. Toutefois il a été mis en évidence que dans des conditions sévères d'utilisation, en particulier dans le cas décrit précédemment d'une perte de pression en monte jumelée, ces câbles ne sont pas considérés comme autorisant l'accès à des performances jugées satisfaisantes.

Le document WO 2019/180352 A1 décrit un pneumatique pour SUV, camionnette ou petit poids lourds dont l'armature de carcasse est constituée d'une unique couche d'éléments de renforcement textiles.

Le document FR 2 969 039 A1 décrit un pneumatique pour poids lourds qui comporte une couche d'éléments de câbles saturés retournée autour de la tringle en complément de l'armature de carcasse pour renforcer celle-ci.

Le document WO 01/49926 A1 décrit des éléments de renforcement qui sont des câbles à couches avec une couche externe insaturée, utilisable en poids lourds.

Les inventeurs se sont ainsi donnés pour mission d'être en mesure de fournir des pneumatiques, notamment des pneumatiques de dimension 315/45 R 22.5, destinés à équiper des véhicules selon une monte jumelée dont les performances d'endurance sont améliorées y compris dans des conditions de roulage en mode sous-gonflé.

Ce but a été atteint selon l'invention par un pneumatique pour véhicule de type poids lourds, comprenant une armature de carcasse radiale constituée d'au moins une couche d'éléments de renforcement métalliques, ledit pneumatique comprenant une armature de sommet, ladite armature de sommet étant coiffée radialement d'une bande de roulement, ladite bande de roulement étant réunie à deux bourrelets par l'intermédiaire de deux flancs, la hauteur de flanc du pneumatique étant inférieure à 165 mm et les éléments de renforcement métalliques de ladite au moins une couche d'armature de carcasse sont des câbles métalliques non frettés à couche externe insaturée présentant au test dit de perméabilité un débit inférieur à 20 cm³/min.

Au sens de l'invention, la hauteur de flanc est déterminée à partir du marquage du pneumatique. Dans le cas d'un pneumatique de dimension 315/45 R22.5, la hauteur de flanc est ainsi égale à 315×45/100, soit 141.75 mm.

De préférence selon l'invention, la hauteur de flanc du pneumatique étant inférieure à 160 mm.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/min présentent un taux de pénétration supérieure à 66%.

Des câbles présentant au test dit de perméabilité un débit inférieur à 2 cm3/min présentent un taux de pénétration supérieure à 90%.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

L'invention propose encore un pneumatique pour véhicule de type poids lourds, comprenant une armature de carcasse radiale constituée d'au moins une couche d'éléments de renforcement métalliques, ledit pneumatique comprenant une armature de sommet, ladite armature de sommet étant coiffée radialement d'une bande de roulement, ladite bande de roulement étant réunie à deux bourrelets par l'intermédiaire de deux flancs, la hauteur de flanc du pneumatique étant inférieure à 165 mm et les éléments de renforcement d'au moins une couche de l'armature de carcasse sont des câbles métalliques multicouches non frettés, à couche externe insaturée, comportant une âme (notée C0) de L fils de diamètre d₀ entourée d'une couche intermédiaire (notée C1) de M fils (M = 4, 5, 6 ou 7) de diamètre d₁ enroulés ensemble en hélice selon un pas p₁, cette couche C1 étant elle-même entourée d'une couche externe (notée C2) de N fils de diamètre d₂ enroulés ensemble en hélice selon un pas p₂, N étant inférieur de 1 à 3 au nombre maximal Nmax de fils enroulables en une couche autour de la couche C1, lesdits câbles présentant les caractéristiques suivantes (d₀, d₁, d₂, p₁ et p₂ en mm):

| | | |
|---|---|---|
| -(i) | 0,14 < d₀ < 0,28 ; | |
| - (ii) | 0,12 < d₁ < 0,25 ; | |
| - (iii) | 0,12 < d₂ < 0,25 ; | |
| - (iv) | pour M = 4 : | 0,40 < (d₀ / d₁) < 0,80 ; |
| | pour M = 5 : | 0,70 < (d₀ / d₁) < 1,10 ; |
| | pour M = 6: | 1,10 < (d₀ / d₁) < 1,40 ; |
| | pour M = 7 : | 1,40 < (d₀ / d₁) < 1,70 ; |
| - (v) | 5 π (d₀ + d₁) < p₁ < p₂ < 5 π (d₀ + 2d₁ + d₂) ; | |
| - (vi) | les fils des couches C1 et C2 sont orientés dans le même sens d'enroulement. | |
| | | |

Les caractéristiques (i) à (vi) ci-dessus, en combinaison, permettent d'obtenir à la fois:
- des forces de contact suffisantes mais limitées entre C0 et C1, favorables à une usure réduite et une fatigue moindre des fils de la couche C1;
- grâce notamment à une optimisation du rapport des diamètres (d₀ / d₁) et des angles d'hélice que forment les fils des couches C1 et C2, une pénétration optimale du caoutchouc à travers les couches C1 et C2 et jusqu'au coeur C0 de ce dernier, assurant d'une part une très haute protection contre la corrosion ou son éventuelle propagation, d'autre part une désorganisation minimale du câble sous sollicitation en forte flexion, ne nécessitant notamment pas la présence d'un fil de frette autour de la dernière couche;
- une usure par fretting réduite entre les fils des couches C1 et C2, ceci malgré la présence de pas différents (p₁ ≠ p₂) entre les deux couches C1 et C2.

Les caractéristiques (v) et (vi) - pas p₁ et p₂ différents et couches C1 et C2 orientés dans le même sens d'enroulement - font que, de manière connue, les fils des couches C1 et C2 sont essentiellement disposés selon deux couches cylindriques (i.e. tubulaires), adjacentes et concentriques. Par câbles à couches dites "tubulaires" ou "cylindriques", on entend ainsi des câbles constitués d'une âme (i.e., noyau ou partie centrale) et d'une ou plusieurs couches concentriques, chacune de forme tubulaire, disposée(s) autour de cette âme, de telle manière que, au moins dans le câble au repos, l'épaisseur de chaque couche est sensiblement égale au diamètre des fils qui la constituent ; il en résulte que la section transversale du câble a un contour ou enveloppe qui est sensiblement circulaire.

La couche externe C2 est une couche tubulaire de N fils dite "insaturée" ou "incomplète", c'est-à-dire que, par définition, il existe suffisamment de place dans cette couche tubulaire C2 pour y ajouter au moins un (N+1)ème fil de diamètre d₂, plusieurs des N fils se trouvant éventuellement au contact les uns des autres.

De préférence, le câble selon cette deuxième variante de l'invention est un câble à couches de construction notée [1+M+N], c'est-à-dire que son âme C0 est constituée d'un seul fil.

Le câble 18.18 à couche externe insaturée de construction 0.20+6×0.18+11×0.18 7/10 SS est un exemple de câble selon cette première variante de l'invention.

Des câbles métalliques non frettés à couche externe insaturée tels qu'ils viennent d'être décrits sont des câbles dans lesquels le mélange caoutchouteux constituant les couches de calandrage pénètrent à un taux tel que lesdits câbles présentent au test dit de perméabilité un débit inférieur à 20 cm³/min.

Le taux de pénétration de ces câbles selon l'invention peut encore être optimisé par tout moyen connu de l'homme du métier. Par exemple avec des mélanges de caoutchouc plus fluides qui pénètrent plus facilement les câbles lors de la cuisson du pneumatique. Il est encore par exemple possible d'augmenter la pression dans le moule lors de la cuisson du pneumatique. Il peut aussi par exemple s'agir d'une combinaison de ces moyens.

De préférence encore, selon l'invention, les éléments de renforcement métalliques de ladite au moins une couche d'armature de carcasse présentent au test dit de perméabilité un débit inférieur à 10 cm³/min et de préférence inférieur à 4 cm³/min et avec de préférence également au moins 2 points à débit nul sur une longueur de 2 cm.

Les résultats obtenus avec des pneumatiques de dimension 315/45R22.5, conformes à l'invention, ont effectivement mis en évidence que les performances en termes d'endurance sont améliorées, quelles que soient les conditions de roulage et notamment dans le cas d'une monte jumelée en mode sous-gonflé.

Les inventeurs ont en effet su mettre en évidence que, notamment dans un pneumatique présentant une hauteur de flanc de moins de moins de 165mm, et de préférence de moins de 160 mm, la flexion du flanc lors de l'écrasement d'un pneumatique sous-gonflé conduit à des rayons de courbure très faibles et à de grandes variations de courbures au tour de roue. Les inventeurs constatent ainsi que les pneumatiques selon l'invention dont les câbles de l'armature de carcasse présentent de la matière caoutchouteuse entre les fils constituants lesdits câbles, confèrent des performances en termes d'endurance améliorées.

Les inventeurs ont mis en évidence que les câbles métalliques non frettés, à couche externe insaturée, de l'armature de carcasse, dans lesquels un mélange caoutchouteux est présent entre au moins une partie des fils le constituant, permettent d'améliorer significativement les propriétés d'endurance de l'armature de carcasse lorsque le pneumatique est utilisé dans des conditions extrêmes de surcharge et/ou de faible gonflage sans nuire à ses propriétés d'endurance en roulage dans des conditions normales et sans pénaliser ses coûts de production. Les inventeurs interprètent ces résultats par la présence du mélange caoutchouteux au sein du câble qui permet d'accepter la flexion dudit câble avec des rayons de courbure relativement faibles sans que ledit câble ou les fils le constituant ne soient altérés. Les inventeurs pensent avoir mis en évidence que la présence du mélange caoutchouteux évite la désorganisation dudit câble c'est-à-dire qu'elle évite un écartement des fils constituants le câble lorsque celui-ci est fléchi avec des rayons de courbure très faibles et prévient ainsi les risques de rupture desdits fils.

Le pneumatique selon l'invention et plus précisément les éléments de renforcement de son armature de carcasse subissent la flexion imposée et la nature desdits éléments de renforcement, c'est-à-dire la présence du mélange caoutchouteux au sein du câble, permet d'améliorer l'endurance desdits câbles subissant une telle flexion et en conséquence contribue à l'amélioration de l'endurance du pneumatique.

D'une manière générale, l'invention peut être mise en oeuvre, pour former les câbles de l'armature de carcasse ci-dessus décrits, avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Selon un mode de réalisation préféré de l'invention, l'armature sommet est formée d'au moins deux couches de sommet de travail d'éléments de renforcement métalliques croisés d'une couche à l'autre en faisant avec la direction circonférentielle des angles compris entre 10° et 45°, lesdits angles étant orientés de part et d'autre de la direction circonférentielle.

De préférence encore, les éléments de renforcement desdites au moins deux couches de sommet de travail sont inextensibles.

De préférence encore selon l'invention, l'armature sommet comporte une couche d'éléments de renforcement circonférentiels.

Selon un mode de réalisation préférée de l'invention, la couche d'éléments de renforcement circonférentiels est radialement disposée entre deux couches de sommet de travail.

Avantageusement selon ce mode de réalisation de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse.

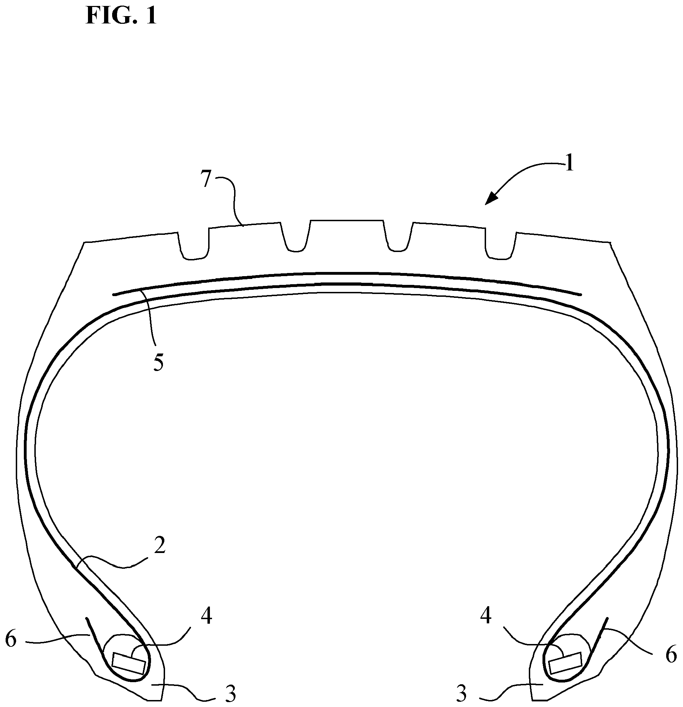

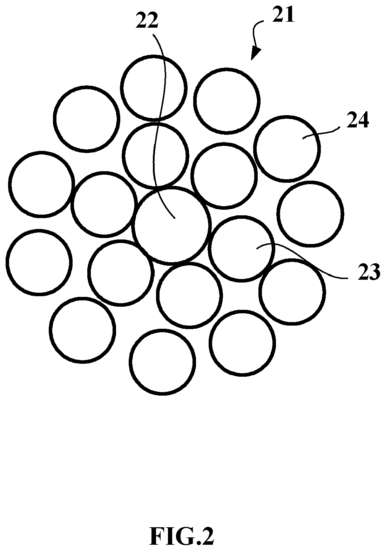

D'autres détails et caractéristiques avantageux de l'invention ressortiront ci-après de la description des exemples de réalisation de l'invention en référence aux figures 1 et 2 qui représentent :
- figure 1, une vue méridienne d'un schéma d'un pneumatique selon l'invention,
- figure 2, une représentation schématique d'une vue en coupe d'un premier exemple de câble d'armature de carcasse selon l'invention.

Les figures ne sont pas représentées à l'échelle pour en simplifier la compréhension.

Sur la figure 1, le pneumatique 1 est de dimension 315/45 R 22.5. Ledit pneumatique 1 comprend une armature de carcasse radiale 2 ancrée dans deux bourrelets 3, autour de tringles 4. L'armature de carcasse 2 est formée d'une seule couche de câbles métalliques enroulée autour de chacune des tringles 4 pour former un retournement 6. L'armature de carcasse 2 est frettée par une armature de sommet 5, elle-même coiffée d'une bande de roulement 7. L'armature de sommet 5 est formée radialement de l'intérieur à l'extérieur :
- d'une couche de triangulation formée de câbles métalliques inextensibles non frettés 2+7×0.35, continus sur toute la largeur de la nappe, orientés d'un angle égal à 50°,
- d'une première couche de travail formée de câbles métalliques inextensibles non frettés 2+7×0.35, continus sur toute la largeur de la nappe, orientés d'un angle égal à 18°,
- d'une couche d'éléments de renforcement circonférentiels formée de câbles métalliques élastiques 3×(0.26+6×0.23),
- d'une seconde couche de travail formée de câbles métalliques inextensibles non frettés 2+7×0.35, continus sur toute la largeur de la nappe, orientés d'un angle égal à 18° et croisés avec les câbles métalliques de la première couche de travail,
- d'une couche de protection formée de câbles métalliques élastiques 3×2×0.35.

Le détail des différentes couches formant l'armature de sommet n'est pas représenté sur les figures.

La figure 2 illustre une représentation schématique de la section d'un câble 21 d'armature de carcasse du pneumatique 1 selon une deuxième variante de réalisation de l'invention. Ce câble est un câble métallique multicouche non fretté 21, à couche externe insaturée de formule de structure 1+6+11, non fretté, constitué d'une âme formée d'un fil 22, d'une couche intermédiaire formée de six fils 23 et d'une couche externe formée de onze fils 24.

Ce câble 21présente les caractéristiques suivantes (d et p en mm) :
- structure 1+6+11 ;
- d₀ = 0.20 (mm);
- d₁ = 0.18 (mm);
- p₁ = 7 (mm)
- d₂ = 0.18 (mm);
- p₂ = 10 (mm),
- (d₀ / d₁) = 1,11 ;
avec d₁, p₁, respectivement le diamètre et le pas d'hélice de la couche intermédiaire et d₂ et p₂, respectivement le diamètre et le pas de d'hélice des fils de la couche externe.

Les fils 23 et 24 enroulés autour du fil 21 sont disposés selon deux couches adjacentes et concentriques, tubulaires (une première couche d'épaisseur sensiblement égale à d₁, puis une couche externe d'épaisseur sensiblement égale à d₂).

Des essais ont été réalisés avec des pneumatiques I réalisés selon l'invention et avec des pneumatiques de référence T1, T2 et T3.

Le pneumatique I selon l'invention est réalisé conformément aux figures 1 et 2.

Le pneumatique T1 est un premier pneumatique du commerce dont les éléments de renforcement de la couche d'armature de carcasse sont des câbles 19.17 NF de formule 0.20+(6+12)×0.17.

Le pneumatique T2 est un deuxième pneumatique du commerce dont les éléments de renforcement de la couche d'armature de carcasse sont des câbles 19.17 NF de formule 0.20+(6+12)×0.17.

Le pneumatique T3 est un troisième pneumatique du commerce dont les éléments de renforcement de la couche d'armature de carcasse sont des câbles 27.16 NF de formule (3+9+15)×0.16.

Le tableau ci-après indique les valeurs obtenues au test dit de perméabilité pour ce qui concerne le débit moyen et le nombre d'éprouvettes à débit nul sur une longueur de 2 cm. Comme expliqué précédemment, ces mesures sont effectuées sur des éprouvettes de câbles prélevées dans la zone flanc du pneumatique. Le débit moyen est déterminé à partir d'une moyenne effectuée sur 10 éprouvettes.

Le nombre d'éprouvettes à débit nul est le nombre de mesures présentant un débit nul parmi les 10 éprouvettes.

| | Test de perméabilité | zone flanc |
|---|---|---|
| Pneumatique 1 | Débit moyen (cm³/min) | 2,1 |
| | Nombre d'éprouvettes à débit nul sur 2 cm | 5110 |
| Pneumatique T1 | Débit moyen (cm³/min) | 11.5 |
| | Nombre d'éprouvettes à débit nul sur 2 cm | 0/10 |
| Pneumatique T2 | Débit moyen (cm³/min) | 15.3 |
| | Nombre d'éprouvettes à débit nul sur 2 cm | 0/10 |
| Pneumatique T3 | Débit moyen (cm³/min) | 87.2 |
| | Nombre d'éprouvettes à débit nul sur 2 cm | 0/10 |

Ces mesures mettent en évidence, que dans les pneumatiques de référence T1, T2 et T3, il n'existe pas de bouchons de caoutchouc dans les câbles puisque toutes les éprouvettes ont des débits non nuls. En outre, dans les câbles de l'armature de carcasse des pneumatiques I selon l'invention, lorsque le débit est non nul, il apparaît qu'il est fortement réduit par rapport aux câbles de l'armature de carcasse des pneumatiques de référence T1, T2 et T3.

Ces observations traduisent notamment une pénétration plus importante des câbles de l'armature de carcasse des pneumatiques I selon l'invention par le caoutchouc comparée à celle des câbles de l'armature de carcasse des pneumatiques de Référence T1, T2 et T3.

Les essais ont consisté à reproduire un roulage de pneumatiques jumelés dont l'un des pneumatiques est dans un état sous-gonflé. Pour cela, les pneumatiques I selon l'invention et les pneumatiques de référence T1, T2 et T3 sont testés en monte jumelée, l'un, le pneumatique testé, étant gonflé à 1 bar et donc à une faible pression et l'autre, le pneumatique support, à 7 bars initialement. Les conditions de gonflage sont rigoureusement les mêmes pour tous les pneumatiques.

Ils effectuent des roulages sur véhicule dans des conditions absolument identiques reproduisant des roulages usuels, notamment en ce qui concerne la charge portée, suivis par des véhicules poids-lourds du type spécifique équipé de la dimension 315/45 R 22.5.

Les roulages sont interrompus régulièrement afin de porter la pression du pneumatique testé de 1 à 9 bars afin de vérifier sa tenue à la pression nominale de gonflage. Le roulage du pneumatique testé reprend ensuite à 1 bar mais avec une réduction de la pression du pneumatique support jusqu'au prochain arrêt. Et ainsi de suite avec à chaque reprise du roulage une réduction de la pression du pneumatique support de façon à sévériser la flexion flanc du pneumatique testé. L'essai s'achève lorsque, du fait d'un endommagement irréversible des câbles, la résistance de l'armature de carcasse devient insuffisante pour soutenir la pression nominale de gonflage et que le pneumatique éclate lors de sa remise en pression.

Les pneumatiques de référence T1, T2 et T3 ont ainsi pu parcourir une distance moyenne de 2000 km dans les conditions imposées lors du test.

Le pneumatique I selon l'invention a parcouru une distance de 4000 Km.

Les pneumatiques selon l'invention permettent ainsi d'améliorer les propriétés d'endurance pour ce qui concerne des roulages en mode sous-gonflé.

## Revendications

1. Pneumatique (1) pour véhicule de type poids lourds, comprenant une armature de carcasse radiale (2) constituée d'au moins une couche d'éléments de renforcement métalliques, ledit pneumatique comprenant une armature de sommet (5), ladite armature de sommet (5) étant coiffée radialement d'une bande de roulement (7), ladite bande de roulement étant réunie à deux bourrelets (3) par l'intermédiaire de deux flancs, **caractérisé en ce que** la hauteur de flanc du pneumatique est inférieure à 165 mm et **en ce que** les éléments de renforcement métalliques (21) de ladite au moins une couche d'armature de carcasse (2) sont des câbles métalliques non frettés, à couche externe insaturée, présentant au test dit de perméabilité, réalisé selon la norme ASTM D2692-98, un débit inférieur à 20 cm³/min.

2. Pneumatique (1) selon la revendication 1, **caractérisé en ce que** les éléments de renforcement métalliques (21) de ladite au moins une couche d'armature de carcasse présentent au test dit de perméabilité, réalisé selon la norme ASTM D2692-98, un débit inférieur à 10 cm³/min et de préférence inférieur à 4 cm³/min.

3. Pneumatique (1) pour véhicule de type poids lourds, comprenant une armature de carcasse radiale (2) constituée d'au moins une couche d'éléments de renforcement métalliques, ledit pneumatique comprenant une armature de sommet (5), ladite armature de sommet (5) étant coiffée radialement d'une bande de roulement (7), ladite bande de roulement étant réunie à deux bourrelets (3) par l'intermédiaire de deux flancs, **caractérisé en ce que** la hauteur de flanc du pneumatique est inférieure à 160 mm et **en ce que** les éléments de renforcement (21) de ladite au moins une couche de l'armature de carcasse (2) sont des câbles métalliques multicouches non frettés, à couche externe insaturée, comportant une âme (C0) de L fils de diamètre d₀ entourée d'une couche intermédiaire (C1) de M fils (M = 4, 5, 6 ou 7) de diamètre d₁ enroulés ensemble en hélice selon un pas p₁, cette couche C1 étant elle-même entourée d'une couche externe (C2) de N fils de diamètre d₂ enroulés ensemble en hélice selon un pas p₂, N étant inférieur de 1 à 3 au nombre maximal Nmax de fils enroulables en une couche autour de la couche (C1), lesdits câbles présentant les caractéristiques suivantes (d₀, d₁, d₂, p₁ et p₂ en mm):
| | | |
|---|---|---|
| - (i) | | 0,14 < d₀ < 0,28 ; |
| - (ii) | | 0,12 < d₁ < 0,25 ; |
| - (iii) | | 0,12 < d₂ < 0,25 ; |
| - (iv) | pour M = 4 : | 0,40 < (d₀ / d₁) < 0,80 ; |
| | pour M = 5 : | 0,70 < (d₀ / d₁) < 1,10 ; |
| | pour M = 6: | 1,10 < (d₀ / d₁) < 1,40 ; |
| | pour M = 7 : | 1,40 < (d₀ / d₁) < 1,70 ; |
| - (v) | 5 π (d₀ + d₁) < p₁ < p₂ < 5 π (d₀ + 2d₁ + d₂) ; | |
| - (vi) | les fils des couches (C1) et (C2) sont orientés dans le même sens d'enroulement. | |

4. Pneumatique (1) selon l'une des revendications 1 à 3, **caractérisé en ce que** les éléments de renforcement de ladite au moins une couche de l'armature de carcasse sont des câbles à couches de construction notée [1+M+N].

5. Pneumatique (1) selon l'une des revendications précédentes, **caractérisé en ce que** la hauteur de flanc du pneumatique est inférieure à 160 mm.

6. Pneumatique (1) selon l'une des revendications précédentes, **caractérisé en ce que** l'armature de sommet (5) comprend deux couches de sommet de travail d'éléments de renforcement métalliques croisés d'une couche à l'autre en faisant avec la direction circonférentielle des angles compris entre 10° et 45°, lesdits angles étant orientés de part et d'autre de la direction circonférentielle.

7. Pneumatique (1) selon l'une des revendications précédentes, **caractérisé en ce que** l'armature de sommet (5) comprend une couche d'éléments de renforcement circonférentiels.

8. Pneumatique (1) selon l'une des revendications précédentes, **caractérisé en ce que** le pneumatique est de dimension 315/45 R 22.5.

## Patentansprüche

1. Luftreifen (1) für ein Fahrzeug vom Typ Lastkraftwagen, der eine radiale Karkassenbewehrung (2) enthält, die aus mindestens einer Schicht metallischer Verstärkungselemente besteht, wobei der Luftreifen eine Scheitelbewehrung (5) enthält, wobei die Scheitelbewehrung (5) radial von einem Laufstreifen (7) überlagert wird, wobei der Laufstreifen mittels zweier Flanken mit zwei Wülsten (3) verbunden ist, **dadurch gekennzeichnet, dass** die Flankenhöhe des Luftreifens geringer ist als 165 mm, und dass die metallischen Verstärkungselemente (21) der mindestens einen Karkassenbewehrungsschicht (2) nicht ummantelte Metallcorde mit ungesättigter Außenschicht sind, die beim gemäß der Norm ASTM D2692-98 durchgeführten so genannten Permeabilitätstest einen Durchsatz von weniger als 20 cm³/min haben.

2. Luftreifen (1) nach Anspruch 1, **dadurch gekennzeichnet, dass** die metallischen Verstärkungselemente (21) der mindestens einen Karkassenbewehrungsschicht beim gemäß der Norm ASTM D2692-98 durchgeführten so genannten Permeabilitätstest einen Durchsatz von weniger als 10 cm³/min und vorzugsweise weniger als 4 cm³/min haben.

3. Luftreifen (1) für ein Fahrzeug vom Typ Lastkraftwagen, der eine radiale Karkassenbewehrung (2) enthält, die aus mindestens einer Schicht metallischer Verstärkungselemente besteht, wobei der Luftreifen eine Scheitelbewehrung (5) enthält, wobei die Scheitelbewehrung (5) radial von einem Laufstreifen (7) überlagert wird, wobei der Laufstreifen mittels zweier Flanken mit zwei Wülsten (3) verbunden ist, **dadurch gekennzeichnet, dass** die Flankenhöhe des Luftreifens geringer ist als 160 mm, und dass die Verstärkungselemente (21) der mindestens einen Schicht der Karkassenbewehrung (2) nicht ummantelte Mehrschicht-Metallcorde mit ungesättigter Außenschicht sind, die einen Kern (C0) von L Fäden mit einem Durchmesser d₀ umgeben von einer Zwischenschicht (C1) von M Fäden (M = 4, 5, 6 oder 7) mit einem Durchmesser d₁ aufweisen, die gemäß einer Steigung p₁ zusammen spiralförmig gewickelt sind, wobei diese Schicht C1 selbst von einer Außenschicht (C2) von N Fäden mit einem Durchmesser d₂ umgeben ist, die gemäß einer Steigung p₂ zusammen spiralförmig gewickelt sind, wobei N um 1 bis 3 niedriger als die maximale Anzahl Nmax von in einer Schicht um die Schicht (C1) wickelbaren Fäden ist, wobei die Corde die folgenden Merkmale aufweisen (d₀, d₁, d₂, p₁ und p₂ in mm) : .
| | |
|---|---|
| - (i) | 0,14 < d₀ < 0,28 ; |
| - (ii) | 0,12 < d₁ < 0,25 ; |
| - (iii) | 0,12 < d₂ < 0,25 ; |
| - (iv) | für M = 4 : |
| | 0,40 < (d₀/d₁) < 0,80 ; |
| | für M = 5 : 0,70 < (d₀/d₁) < 1,10 ; |
| | für M = 6 : 1,10 < (d₀/d₁) < 1,40 ; |
| | für M = 7 : 1,40 < (d₀/d₁) < 1,70 ; |
| - (v) | 5 π (d₀+d₁) < p₁ < p₂ < 5 π (d₀ + 2d₁ + d₂); |
| - (vi) | die Fäden der Schichten (C1) und (C2) in der gleichen Wickelrichtung ausgerichtet sind. |

4. Luftreifen (1) nach einem der Ansprüche 1 à 3, **dadurch gekennzeichnet, dass** die Verstärkungselemente der mindestens einen Schicht der Karkassenbewehrung Corde mit Schichten eines mit [1+M+N] bezeichneten Aufbaus sind.

5. Luftreifen (1) nach einem der vorhergehenden Ansprüche, **dadurch gekennzeichnet, dass** die Flankenhöhe des Luftreifens geringer ist als 160 mm.

6. Luftreifen (1) nach einem der vorhergehenden Ansprüche, **dadurch gekennzeichnet, dass** die Scheitelbewehrung (5) zwei Arbeitsscheitelschichten von metallischen Verstärkungselementen enthält, die sich von einer Schicht zur anderen kreuzen, indem sie mit der Umfangsrichtung Winkel zwischen 10° und 45° bilden, wobei die Winkel zu beiden Seiten der Umfangsrichtung ausgerichtet sind.

7. Luftreifen (1) nach einem der vorhergehenden Ansprüche, **dadurch gekennzeichnet, dass** die Scheitelbewehrung (5) eine Schicht von Umfangsverstärkungselementen enthält.

8. Luftreifen (1) nach einem der vorhergehenden Ansprüche, **dadurch gekennzeichnet, dass** der Luftreifen die Größe 315/45 R 22.5 hat.

## Claims

1. **-** Tyre (1) for a vehicle of the heavy-duty type, comprising a radial carcass reinforcement (2) made up of at least one layer of metal reinforcing elements, said tyre comprising a crown reinforcement (5), said crown reinforcement (5) being capped radially by a tread (7), said tread being joined to two beads (3) via two sidewalls, **characterized in that** the sidewall height of the tyre is less than 165 mm and **in that** the metal reinforcing elements (21) of said at least one carcass reinforcement layer (2) are non-wrapped metal cords, with an unsaturated external layer, that yield a flow rate of less than 20 cm3/min in the test known as the permeability test, measured according to the standard ASTM D2692-98.

2. **-** Tyre (1) according to Claim 1, **characterized in that** the metal reinforcing elements (21) of said at least one carcass reinforcement layer yield a flow rate of less than 10 cm³/min and preferably less than 4 cm³/min in the test known as the permeability test, measured according to the standard ASTM D2692-98.

3. **-** Tyre (1) for a vehicle of the heavy-duty type, comprising a radial carcass reinforcement (2) made up of at least one layer of metal reinforcing elements, said tyre comprising a crown reinforcement (5), said crown reinforcement (5) being capped radially by a tread (7), said tread being joined to two beads (3) via two sidewalls, **characterized in that** the sidewall height of the tyre is less than 160 mm and **in that** the reinforcing elements (21) of said at least one carcass reinforcement layer (2) are non-wrapped multilayer metal cords, with an unsaturated external layer, having a core (C0) of L threads of diameter d₀ surrounded by an intermediate layer (C1) of M threads (M = 4, 5, 6 or 7) of diameter d₁ that are wound together in a helix at a pitch p₁, this layer C1 itself being surrounded by an external layer (C2) of N threads of diameter d₂ that are wound together in a helix at a pitch p₂, N being 1 to 3 less than the maximum number Nmax of threads that are able to be wound in a layer around the layer (C1), said cords having the following characteristics (d₀, d₁, d₂, p₁ and p₂ in mm):
| | |
|---|---|
| - (i) | 0.14 < d₀ < 0.28; |
| - (ii) | 0.12 < d₁ < 0.25; |
| - (iii) | 0.12 < d₂ < 0.25; |
| - (iv) | for M = 4: 0.40 < (d₀ / d₁) < 0.80; |
| | for M = 5: 0.70 < (d₀ / d₁) < 1.10; |
| | for M = 6: 1.10 < (d₀ / d₁) < 1.40; |
| | for M = 7: 1.40 < (d₀ / d₁) < 1.70; |
| - (v) | 5 π (d₀ + d₁) < p₁ < p₂ < 5 π (d₀ + 2d₁ + d₂); |
| - (vi) | the threads of the layers (C1) and (C2) are oriented in the same direction of winding. |

4. **-** Tyre (1) according to one of Claims 1 to 3, **characterized in that** the reinforcing elements of said at least one carcass reinforcement layer are layered cords with a construction denoted [1+M+N],

5. **-** Tyre (1) according to one of the preceding claims, **characterized in that** the sidewall height of the tyre is less than 160 mm.

6. **-** Tyre (1) according to one of the preceding claims, **characterized in that** the crown reinforcement (5) comprises two working crown layers of metal reinforcing elements that are crossed from one layer to the other, forming angles of between 10° and 45° with the circumferential direction, said angles being oriented on either side of the circumferential direction.

7. **-** Tyre (1) according to one of the preceding claims, **characterized in that** the crown reinforcement (5) comprises one layer of circumferential reinforcing elements.

8. **-** Tyre (1) according to one of the preceding claims, **characterized in that** the tyre is of the size 315/45 R 22.5.
